# EUROPÄISCHE PATENTANMELDUNG

(11) **EP 1 285 572 A1**
(43) Veröffentlichungstag der Anmeldung: **26.02.2003**
(21) Anmeldenummer: 02017050.2
(22) Anmeldetag: 27.07.2002
(51) Int. Cl.: A01F 15/08

(54) **Ballenpresse**

(30) Priorität: 10.08.2001 DE 10145691
(71) Anmelder: DEERE & COMPANY, Moline, Illinois 61265-8098 (US)
(72) Erfinder: Boucher, Jean-Fancois, 70100 Gray (FR)
(74) Vertreter: Magin, Ludwig Bernhard

(57) **Zusammenfassung**

Herkömmliche Ballenpressen zum Herstellen quaderförmiger Ballen weisen einen Preßraum auf, dessen Querschnitt nur durch aufwendige Umbaumaßnahmen veränderbar ist.

Es wird eine Ballenpresse (10) vorgeschlagen, deren Preßraum (18) mittels Stellmotoren (106) in der Höhe verstellbar ist und der einen Presskolben (48) mit Stegen (84) aufweist, die sich durch Schlitze (82) in einer Decke (21) des Pressraums (18) erstrecken können.

Ballenpressen (10) werden in der Landwirtschaft eingesetzt.

## Beschreibung

Die Erfindung betrifft eine Ballenpresse mit einem quaderförmigen Preßraum und einem in diesem beweglich aufgenommenen Presskolben.

Der Prospekt "GREENLAND Großpackenpresse Vario Industry" ohne Druckvermerk offenbart eine Großballenpresse mit einem Presskanal, der in 5-cm-Schritten zwischen einer Höhe von 0,65 und 0,8 m einstellbar ist. Auf diese Weise können Ballen verschiedener Abmessungen erzeugt werden.

Das der Erfindung zugrunde liegende Problem wird darin gesehen, daß ein Umbau auf einen anderen Kanalquerschnitt ungefähr einen Tag dauert. Außerdem wird neuerdings eine größere Spannweite an Kanalquerschnitten gefordert.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Auf diese Weise kann der Querschnitt des Presskanals beliebig verändert und der Größe, insbesondere der Höhe, des für das jeweilige Feld zur Verfügung stehenden Transportfahrzeugs angepasst werden. Langwierige Umbaumaßnahmen sind nicht erforderlich.

Wenn sich die Nadeln und mit diesen der gesamte Bindeapparat an dem beweglichen Gehäuseoberteil befindet, ändert sich auch bei deren Verstellung die räumliche Zuordnung nicht, sodaß ein sicherer Eintritt der Nadelspitzen in den Knoter gesichert ist.

Die Verstellbarkeit eines Antriebs, z. B. eines Schwungradgetriebes mit einem Kurbelarm oder eines Hydraulikmotors, in der Verstellrichtung des Gehäuseoberteils macht es möglich, die Kraft stets in der Mitte des Presskolbens angreifen zu lassen, so daß dieser in der Endstellung eine verkantungsfreie, sichere Endstellung einnimmt.

Wenn auch grundsätzlich die Verwendung von Spindeln, Spreizgestängen und dergleichen zur Verstellung des Gehäuseoberteils möglich wäre, so ist die Verwendung von Motoren, insbesondere von fernbetätigbaren Motoren doch vorteilhafter, weil diese auf einfache Weise hohe Kräfte übertragen können.

Wenn die Seitenflächen des Presskanals auf der gesamten Höhe bedeckt sind, kann kein Pressgut heraustreten und Verstopfungen verursachen. Wenn die seitlichen Wände einflächig von oben oder unten durchgehen, ergibt sich eine glatte Fläche mit geringem Reibwiderstand; sind obere und untere Wände vorgesehen, die sich vertikal überlappen, stehen die gesamten Seitenwände weder oben noch unten über. Je nach den gewählten Abmessungen kann eine derart große vertikale Stellbewegung erreicht werden, daß ein Zugriff in den Pressraum von außen möglich ist.

Eine leichte Bauweise der Ballenpresse wird dadurch erreicht, daß die großen Teile, nämlich die Decke und der Boden, wie auch Seitenwände des Pressraums leicht ausgeführt sind und die Kräfte von einigen wenigen massiven Teilen, nämlich der Verstellvorrichtung aufgenommen werden, die diese umgeben, tragen und verstellen.

Eine Ausbildung des oberen Bereichs des Presskolbens als eine Ansammlung von Stegen führt zu einer im wesentlichen geschlossenen Pressfläche des Presskolbens, die zu gleichmäßiger Verdichtung führt. Der Presskolben kann sowohl tatsächlich als auch nur gedanklich in einen Ober- und einen Unterteil gegliedert werden.

Schlitze in der Decke, z. B. als Alternative zu einer großen Öffnung haben den Vorteil, daß sich die Stege durch sie hindurch erstrecken können und daß die Decke den Preßraum weitestmöglich bedeckt. Die Veränderung des Querschnitts des Pressraums kann dann dadurch erfolgen, daß die Decke abgesenkt oder angehoben wird und sich die Stege mehr oder weniger weit durch die Schlitze hindurch erstrecken.

Die tatsächliche Gliederung des Presskolbens in zwei Teile führt zu einer fertigungstechnischen Vereinfachung.

Die seitliche Bedeckung des Pressraums steht einer Höhenverstellung nicht im Weg, wenn sich die Seitenwände in Schlitze des bewegten oder nicht bewegten Gehäuseteils erstrecken und in diese mehr oder weniger weit eintauchen können.

Die Anpassung der Stellung der Nadeln zu den Knotern ist dann leicht möglich, wenn in dem Grundkörper Öffnungen vorgesehen sind, durch die sich die Nadeltragarme erstreckende und mit dem beweglichen Teil der Verstellvorrichtung verbundene Zapfen erstrecken können.

Wenn anstelle einer Veränderung der Höhe des Ballens dessen Breite veränderbar ist, kann nicht nur auf die Plattformhöhe des Transportfahrzeugs sondern auch alternativ auf deren Länge und Breite reagiert und eine optimale Ausladung erreicht werden. Dem Prinzip nach würde die Verstellvorrichtung nur um 90 Grad gedreht und horizontal auseinander gefahren werden. Die Stege würden sich nicht in der Höhe, sondern in der Breite erstrecken. Wenn der Zufuhrkanal in seinem Querschnitt angepasst oder mit Leitblechen versehen würde, ist eine gleichmäßige Beschickung auf der ganzen Breite gewährleistet.

In der Zeichnung ist ein nachfolgend näher beschriebenes Ausführungsbeispiel der Erfindung dargestellt. Es zeigt:
- Fig. 1: eine erfindungsgemäße Ballenpresse in Seitenansicht und schematischer Darstellung,
- Fig. 2: einen Pressraum der Ballenpresse in einem weiten Zustand in Seitenansicht und in schematischer Darstellung,
- Fig. 3: den Pressraum der Ballenpresse in einem engen Zustand in Seitenansicht und in schematischer Darstellung,
- Fig. 4: den Pressraum in einem weiten Zustand in einem vertikalen Schnitt quer durch den Pressraum entlang der Linie 4-4 in Figur 1 und in der Blickrichtung der dazugehörigen Pfeile und
- Fig. 5: den Pressraum in einem engen Zustand in einem vertikalen Schnitt quer durch den Pressraum entlang der Linie 4-4 in Figur 1 und in der Blickrichtung der dazugehörigen Pfeile.

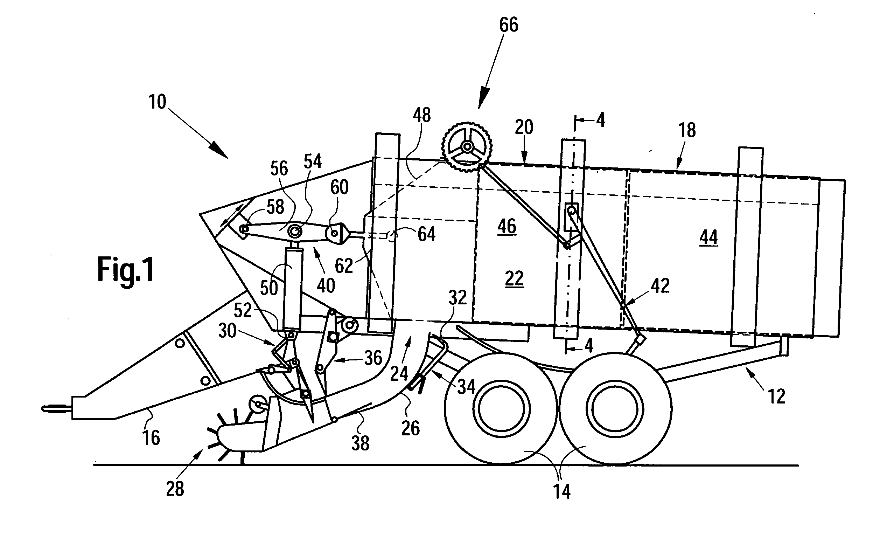

In Figur 1 ist eine Ballenpresse 10 in der Form einer Großballenpresse zum Herstellen quaderförmiger Ballen gezeigt, die einen Rahmen 12 enthält, der auf Bodenstützrädern 14 in Tandemanordnung abgestützt ist. Eine Deichsel 16 ist an den Rahmen 12 angeschlossen und erstreckt sich von diesem aus nach vorne und ist so ausgebildet, daß sie an ein Zugfahrzeug, wie einen nicht gezeigten Ackerschlepper, angeschlossen werden kann, der mit einer Zapfwelle ausgerüstet ist, um Leistung zum Antreiben verschiedener angetriebener Komponenten der Ballenpresse 10 zu liefern. Ein Preßraum 18 oder eine Kammer von rechteckförmigem Querschnitt wird teilweise von einem Gehäuseoberteil 20 und einem Gehäuseunterteil 22 gebildet, wobei der Gehäuseunterteil 22 mit einem Guteinlass 24 versehen ist, an den ein gekrümmter Zufuhrkanal 26 angeschlossen ist, der als ein Vorpreßraum dient, wie dies nachfolgend beschrieben wird. Eine Aufnahmevorrichtung 28 in der Art einer Pick-up und mit einer zur Mitte fördernden Schnecke ist vor dem Zufuhrkanal 26 angeordnet, um ein Schwad von Erntegut vom Boden aufzuheben und es an eine Verdichtergabel 30 abzugeben, die dazu dient, Erntegut in dem Zufuhrkanal 26 zu verdichten, bis sich eine Ladung von vorgewählter Dichte stromabwärts von Fingern 32 einer Rückhaltevorrichtung 34 angesammelt hat, wobei die Rückhaltevorrichtung 34 für eine Bewegung zwischen einer Rückhaltestellung, in der die Finger 32 in der Nähe des Guteinlasses 24 in den Zufuhrkanal 26 hineinragen, und einer Zufuhrstellung, in der die Finger 32 aus dem Zufuhrkanal 26 herausgezogen sind, schwenkbar montiert sind, um es der Ladung Erntegut zu ermöglichen, mittels eines Ladegabelzusammenbaus 36 über den Guteinlass 24 in den Preßraum 18 hineingestopft zu werden. An einer vorderen unteren Stelle des Zufuhrkanals 26 ist eine federbelastete Klappe 38 schwenkbar montiert, die in Abhängigkeit von sich in dem Zufuhrkanal 26 befindlichem Erntegut schwenkt, das eine gewünschte Dichte erreicht, um die Bestromung eines elektrischen Steuerkreislaufs (nicht gezeigt) zu bewirken, der entsprechende Antriebsverbindungen herstellt, die zuerst bewirken, daß die Rückhaltevorrichtung 34 sich so bewegt, daß sie die Finger 32 aus der sperrenden in die in Figur 1 gezeigte Stellung zurückzieht, und dann den Ladegabelzusammenbau 36 derart aktiviert, daß daraufhin die Verdichtergabel 30 durch den Zufuhrkanal 26 gleiten und die Ladung des Ernteguts in den Preßraum 18 bewegen kann. Wenn die Ladung des Ernteguts einmal in den Preßraum 18 gestopft ist, wird ein Kolbenmechanismus 40, der vor dem Rahmen 12 angeordnet ist, in einer gesteuerten Reihenfolge nach dem Ladegabelzusammenbau 36 betätigt, um das Erntegut nach hinten in den Preßraum 18 zu bewegen, wo es in einem Stapel verdichtet wird, wie dies im Stand der Technik gut bekannt ist. Nachdem der Stapel von verdichtetem Material eine vorgewählte Länge erreicht hat, wird ein Nadelzusammenbau 42 zum Liefern von Bindegarn, der mehrere gekrümmte Nadeln 68 enthält, betätigt, um mehrere Garnstränge einer entsprechenden Anzahl nicht gezeigter Knoter zuzuführen, die so funktionieren, daß sie Garnlängen um die vorgewählte Länge der Stapel legen, um einen Ballen 44 zu bilden, der zum Entladen fertig ist, was dann geschieht, wenn er von einem Ballenteil 46 aus dem rückwärtigen Endbereich des Pressraums 18 herausgedrückt wird, wenn er in seiner Länge zunimmt, weil neue Ladungen von Erntegut in den Preßraum 18 gestopft werden. Da sich - wie nachfolgend erläutert - die Erfindung auf die Verstellung des Pressraums 18 bezieht, könnte die Menge des zugeführten Ernteguts an die jeweilige Größe des Pressraums 18 angepasst werden.

Nimmt man wieder Bezug auf die Einzelheiten des Kolbenmechanismus 40, dann ist zu erkennen, daß letzterer einen Presskolben 48 enthält, der für eine hin- und hergehende Bewegung in dem Pressraum 18 zwischen einer zurückgezogenen Stellung vor dem Guteinlass 24 und einer ausgefahrenen Stellung über dem Guteinlass 24 (sh. Figur 1) angeordnet ist. Diese Bewegung des Presskolbens 48 hat zum Ergebnis, daß Ladungen von Erntegut, die aus dem Zufuhrkanal 26 in den Preßraum 18 eingeführt werden, gegen einen Stapel von Erntegut verdichtet werden, was einen teilweise gebildeten Ballenteil 46 und/oder den kompletten Ballen 44 einschließt. Der Kolbenmechanismus 40 enthält weiterhin einen als aus- und einfahrbare Betätigungsvorrichtung ausgebildeten Antrieb 50, der hier als eine doppeltwirkende Hydraulikzylinder-Kolben-Einheit dargestellt ist, deren Zylinderende mit einem Bolzen 52 schwenkbar an den Rahmen 12 an einer Stelle oberhalb der Verdichtergabel 30 verankert ist. Das kolbenseitige Ende des Antriebs 50 ist an einer Verbindungsstelle 54, etwa mit einem Bolzen, an einer Stelle zwischen gegenüberliegenden Enden eines als Kurbelarm dienenden ersten Lenkers 56 angeschlossen, dessen vorderer Endbereich an einer Lagerstelle 58 schwenkbar an den Rahmen 12 angeschlossen ist. Ein rückwärtiger Endbereich des erstens Lenkers 56 ist in einer Lagerstelle 60, etwa mit einem Bolzen, an einen vorderen Endbereich eines zweiten als Pleuelstange funktionierenden Lenkers 62 angeschlossen, dessen rückwärtiger Endbereich in einer Lagerstelle 64, etwa mittels eines Bolzens mit dem Presskolben 48 verbunden ist. Es wird hier darauf hingewiesen, daß die verbindenden Bolzen der Lagerstellen 58 und 64 entlang einer Linie von Zentren angeordnet sind, die entlang oder ungefähr entlang einer mittigen Längsachse des Pressraums 18 liegt. Dies hat zum Ergebnis, daß die Reaktionskraft des Ernteguts, das auf den Presskolben 48 wirkt, im wesentlichen von dem Antrieb 50 genommen wird, wenn sich der erste und der zweite Lenker 56 und 62 entlang einer Linie befinden, wie dies der Fall ist, wenn sich der Presskolben 48 in seiner rückwärtigen Endstellung befindet. Es wird weiterhin darauf hingewiesen, daß die beiden Lenker 56 und 62 jeweils als ein Paar in der Querrichtung einen Abstand zueinander aufweisender Lenker ausgebildet sein könnten. Der Antrieb 50 würde dann an der Verbindungsstelle 54 (Bolzen) an einer Stelle zwischen dem Paar von Lenkern 56 angeschlossen werden, die den ersten Lenker 56 bilden. Es wird daher erkannt, daß der Presskolben 48 den Gleiter eines Gleitkurbelmechanismus bildet, der einen ersten Lenker 56 als Kurbelarm und einen zweiten Lenker 62 und die Lenker 94 als Pleuelstange enthält. Obwohl sich das von den Lenkern 56, 62 und 94 gebildete Gestänge nicht über eine Totpunktstellung hinausbewegt, könnte es als ein Kniemechanismus oder Kniegelenk bezeichnet werden. Wenn auch das bevorzugte Ausführungsbeispiel einen Antrieb 50 zeigt, der an den ersten Lenker 56 an einer Stelle zwischen gegenüberliegenden Enden des ersten Lenkers 56 angeschlossen ist, könnte des weiteren der Antrieb an irgendeiner Stelle zwischen der Lagerstelle 58 und der Lagerstelle 64 angeschlossen werden, zum Beispiel könnte der Antrieb 50 an dem Bolzen 60 oder an einem Punkt entlang der Länge des zweiten Lenkers 62 angeschlossen werden, wobei sich der Betrieb noch in einer besseren Art als der der bekannten Vorrichtungen darstellt, bei denen die Betätigungsvorrichtung direkt an den Presskolben 48 angeschlossen ist.

Weitere Einzelheiten dieser Ballenpresse 10 sind in der EP-A2-0 940 072 beschrieben, deren Offenbarung hierin einbezogen wird. Es wird darauf hingewiesen, daß anstelle dieses speziellen Antriebs mit einem Hydraulikmotor ein herkömmlicher Kurbeltrieb genauso anwendbar ist.

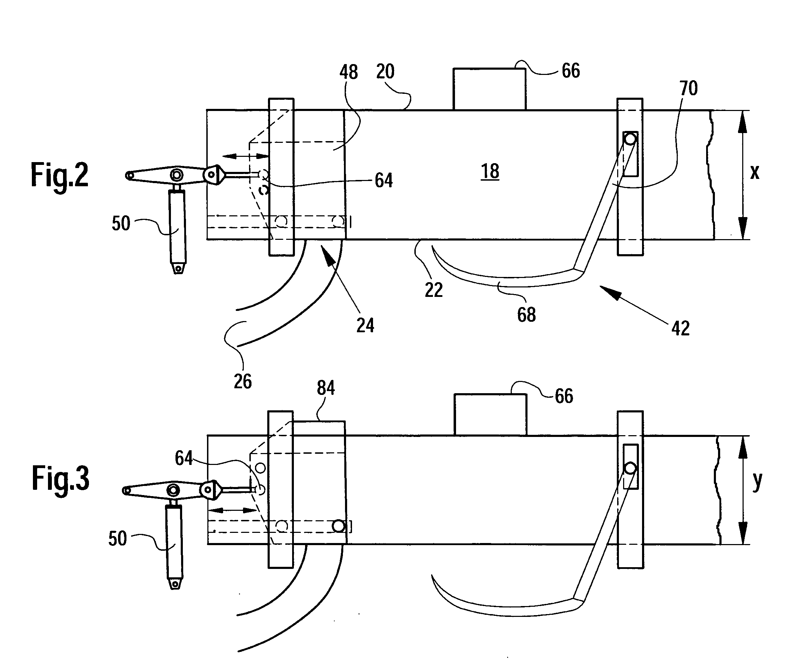

Die Figuren 2 bis 5 beziehen sich nur auf die Ausbildung des Pressraums 18 und des in diesem geführten Presskolbens 48. Die Besonderheit dieser Erfindung liegt darin, daß der Querschnitt und insbesondere die Höhe des Pressraums 18 veränderbar ist, um Ballen 44 unterschiedlicher Höhe und somit auch unterschiedlicher Masse erzeugen zu können.

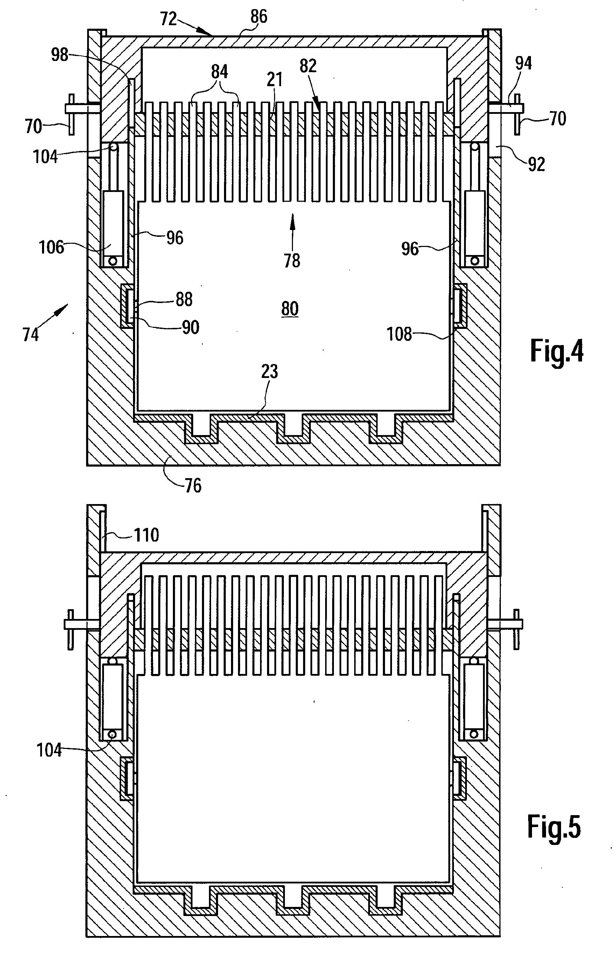

Zu diesem Zweck ist der Gehäuseoberteil 20 höhenverstellbar angeordnet, wie dies mit Blick auf die Figuren 4 und 5 später erläutert wird.

Der Gehäuseoberteil 20 ist mit einer Decke 21 ausgestattet, die in herkömmlicher Weise als ein dickes Blech ausgebildet ist, das in sich relativ biegesteif ist und sich vorzugsweise einstückig über die gesamte Länge des Pressraums 18 erstreckt. Auf der Oberseite des Gehäuseoberteils 20 und rückwärtig des Zufuhrkanals 26 ist in bekannter Weise ein Knoterzusammenbau 66 vorgesehen, in den die Nadeln 68 des Nadelzusammenbaus 42 eintreten können. Der Nadelzusammenbau 42 enthält auf jeder Seite einen Nadeltragarm 70, der in einer vertikalen Ebene schwenkbar ist und die Nadeln 68 durch den Preßraum 18 hindurch mit dem nicht gezeigten Garn zu dem Knoterzusammenbau 66 bewegt, sobald ein Ballen 44 gebunden wird. Die Decke 21 wird an verschiedenen Stellen auf ihrer Länge von jeweils einem Joch 72 getragen, das einen Teil einer Verstellvorrichtung 74 bildet, zu der jeweils auch ein Grundkörper 76 gehört. Über den Bewegungsbereich des Presskolbens 48 sind in die Decke 21 in der Bewegungsrichtung verlaufende Schlitze 82 vorgesehen. Um die Steifigkeit der Decke 21 in diesem Bereich ausreichend zu sichern, kann die Decke 21 relativ dickwandig ausgebildet werden oder mit Verstärkungsblechen oder dergleichen versehen werden.

Der Boden 23 ist in herkömmlicher Bauart aus einem gegebenenfalls profilierten Stahlblech gebildet, das sich über die gesamte Länge des Pressraums 18 erstreckt und unbeweglich auf den jeweiligen Grundkörpern 76 aufliegt. Während die Decke 21 im wesentlichen geschlossen ist, wird der Boden 23 von dem Guteinlass 24 für den Zufuhrkanal 26 und der Eintrittsöffnung für die Nadeln 68 unterbrochen. Die Decke 21 und der Boden 23 verlaufen im wesentlichen zueinander parallel; allerdings sind im rückwärtigen Auslassbereich für den Ballen 44 nicht gezeigte aber bekannte verstellbare Klappen vorgesehen, die dem Ballen 44 einen bestimmten Bewegungswiderstand verleihen.

Der Kolbenmechanismus 40 enthält den Presskolben 48, der mittels des Antriebs 50 zwischen zwei Endstellungen verschiebbar ist, wie dies in der EP-A2-0 940 072 beschrieben ist.

Der Presskolben 48 gliedert sich in dem bevorzugten Ausführungsbeispiel in einen Oberteil 78 und einen Unterteil 80, die entweder getrennt voneinander ausgebildet sind und starr miteinander verbunden werden oder aus einem Stück gebildet werden.

Der Oberteil 78 setzt sich im wesentlichen aus Stegen 84 zusammen, die parallel zueinander verlaufen und sich aufrecht hauptsächlich in der Bewegungsrichtung des Presskolbens 48 erstrecken. Die Höhe der Stege 84 ist so bemessen, daß sie sich in jeder Stellung der Decke 21 durch die Schlitze 82 hindurch erstrecken. Die Anzahl der Stege 84 ist so gewählt, daß sich eine. relativ geschlossene Vorderfläche des Presskolbens 48 ergibt und die Zwischenräume zwischen den Stegen 84 relativ gering sind. In dem gewählten Ausführungsbeispiel sind neunzehn Stege 84 vorhanden; in anderen Beispielen können es mehr oder weniger sein. Die Breite der Stege 84 ist so gewählt, daß sie mit relativ wenig Spiel in den Schlitzen 82 aufgenommen werden.

Der Unterteil 80 ist als vollkommen geschlossener Kasten ausgebildet. Abweichend hiervon kann der Unterteil 80 auch unten und/oder an der in Figur 1 linken Seite offen gestaltet sein. An den Seitenwänden des Unterteils 80 sind Zapfen 88 mit auf diesen drehbar gelagerten Rollen 90 vorgesehen, und zwar mehrere in einer Reihe auf gleicher Höhe.

In nicht gezeigter Weise können an der dem Pressgut zugelegenen Seite Verdichtungsmittel, Kanäle für den Durchtrieb der Nadeln oder dergleichen vorgesehen sein.

Der Lenker 62 greift vorzugsweise mittig an dem Unterteil 80 gelenkig an.

Die Lagerstelle 58 zur Anlenkung des ersten Lenkers 56 ist sowohl in der Höhe als auch in der Längsrichtung des Pressraums 18 z. B. auf einer schiefen Ebene derart verstellbar ausgebildet, daß sich die beiden Lenker 56, 62 in ihrer gestreckten Stellung jeweils in der Längsmittenebene des Pressraums 18 erstrecken. Allerdings ist dies nur eine bevorzugte Ausführung, auf die vielfach verzichtet werden kann. Je nach der Ausbildung der Führung des Presskolbens 48 können die Lenker 56 und 62 auch außermittig des Pressraums 18 angreifen, d. h. die Lagerstelle 58 des Lenkers 56 bleibt unverändert.

Zwischen der Decke 21 und dem Boden 23 erstrecken sich auf jeder Seite eine Seitenwand 96, die in einem Schlitz 98 in den seitlichen Schenkeln des Jochs 72 vertikal verschiebbar gleitend aufgenommen ist. Die Seitenwände 96 verlaufen fest oder lösbar seitlich außerhalb der Decke 21 und sind mit dem Grundkörper 76 verbunden.

Das Joch 72 ist in der Form eines auf dem Kopf stehenden "U" ausgebildet und aus Rohrmaterial oder als Schweißzusammenbau hergestellt. Jeder vertikale Schenkel des Jochs 72 ist mit einem Schlitz 98 versehen und über eine Brücke 86 mit dem anderen vertikalen Schenkel starr verbunden. An dem unteren Ende jedes Schenkels jedes Jochs 72 ist jeweils ein Anschluß 104 für einen Stellmotor 106 vorgesehen, auf den später noch genauer eingegangen wird. Anstelle der Stellmotoren 106 könnten auch andere Verstellmechanismen, z. B. Hebel, Gewindespindeln, etc. verwendet werden. An der Innenseite des Jochs 72 ist die Decke 21 an den Schenkeln fest angebracht.

Der Grundkörper 76 ist in der Form eines "U" ausgebildet, dessen Schenkel sich zu dem Joch 72 hin nach oben erstrecken. Zwischen den Schenkeln liegt der Boden 23 auf dem Grundkörper 76 auf und ist mit diesem verbunden. Ungefähr auf der halben Höhe der Schenkel ist auf jeder Seite eine als U-Schiene ausgebildete Führung 108 an oder in den Schenkeln angebracht, die parallel zu dem Boden 23 verlaufen. Diese Führungen 108 nehmen die Rollen 90 des Unterteils 80 in sich drehend auf. Oberhalb der Führungen 108 erstrecken sich aufrecht die Seitenwände 96. Im oberen Bereich der Schenkel sind Öffnungen 92 vorgesehen, durch die sich Zapfen 94 zur Aufnahme des Nadeltragarms 70 an dem Joch 72 beweglich erstrecken. Während der Boden des Grundkörpers 76 ebenfalls aus einem Rohr, einer Schiene, einem Schweißzusammenbau oder dergleichen gebildet sein kann, sind seine Schenkel als vertikale Führung ausgebildet, die einen Innenraum 110 enthalten. Am Boden jedes Innenraums 110 ist ebenfalls ein Anschluß 104 für das andere Ende des Stellmotors 106 vorgesehen. In dem darüberliegenden Bereich des Innenraums 110 sind die Schenkel des Jochs 72 vertikal beweglich gleitend aufgenommen.

Die Stellmotoren 106 erstrecken sich zwischen dem Boden des Innenraums 110 und dem unteren Ende der Schenkel des Jochs 72 und sind über die jeweiligen Anschlüsse 104 mit diesen formschlüssig verbunden. Die Stellmotoren 106 können sowohl als Hydraulik- als auch als Elektromotoren ausgebildet sein, was jedoch von den zu übertragenden Kräften, den Platzverhältnissen und dergleichen abhängig sein kann. Es muß jedoch gewährleistet sein, daß bei einem Verstellvorgang alle Stellmotoren 106 exakt den gleichen Weg zurücklegen, damit es nicht zu Verspannungen zwischen den jeweiligen Jochen 72 kommt. Die Stellmotoren 106 werden ferngesteuert, z. B. von dem die Ballenpresse 10 ziehenden Fahrzeug. Während bei dem vorliegenden Ausführungsbeispiel von doppeltwirkenden Hydraulikmotoren als Stellmotoren 106 ausgegangen wird, können in anderen Ausführungsformen auch einfach wirkende Stellmotoren 106 verwendet werden, die entweder aufgrund von Federkraft oder der Schwerkraft der Joche 72 nach unten wieder eingefahren werden.

Nach alledem ergibt sich folgender Aufbau und folgende Funktion.

In die Grundkörper 76 werden der Boden 23 und die Führungen 108 eingesetzt und befestigt. Anschließend werden die Stellmotoren 106 in die Innenräume 110 eingesetzt, mit den Grundkörpern 76 verbunden und an ein nicht gezeigtes Hydrauliksystem angeschlossen. Dann wird der Presskolben 48 mit seinen Rollen 90 in die Führungen 108 eingeschoben und der Lenker 62 mit dem Presskolben 48 verbunden. Daraufhin wird die Decke 21 auf den Presskolben 48 aufgelegt, so daß sich die Stege 84 durch die Schlitze 82 erstrecken. Anschließend wird das Joch 72 in die Innenräume 110 eingeschoben und mit der Decke 21 und den Stellmotoren verbunden. Schließlich werden die Zapfen 94 durch die Öffnungen 92 gesteckt und an dem Joch 72 befestigt und mit den Nadeltragarmen 70 verbunden.

Gemäß den Figuren 2 und 4 kann der Preßraum 18 einen weiten oder hohen und gemäß den Figuren 3 und 5 kann er einen engen oder niedrigen Zustand annehmen.

Die weitere Beschreibung geht davon aus, daß der weite Zustand gemäß Figur 2 und 4 in einen engen Zustand gemäß den Figuren 3 und 5 überführt werden soll, was wie folgt geschieht.

Die Stellmotoren 106 werden synchron eingefahren und ziehen die Joche 72 nach unten, wodurch der Preßraum 18 niederer wird. Gleichzeitig wird die Lagerstelle 58 verschoben, so daß der Hub des Presskolbens 48 und die Lage der Lenker 56, 62 mit Bezug auf den Presskolben 48 unverändert bleibt.

Aufgrund der Anbringung des Nadelzusammenbaus 42 an dem Joch 72 bzw. dem Gehäuseoberteil 20 bewegt sich ersterer ebenfalls nach oben bzw. nach unten und bewahrt die räumliche Beziehung zu dem Knoterzusammenbau 66.

Während bei dem vorliegenden Ausführungsbeispiel davon ausgegangen wird, daß der Gehäuseoberteil 20 beweglich und der Gehäuseunterteil 22 fest ist, könnte dies auch umgekehrt sein, wobei dann allerdings der Zufuhrkanal 26 und die mit ihm in Verbindung stehenden Komponenten entsprechend angepasst werden müssten. Schließlich könnten auch alle Seitenwände, die Decke 21 und der Boden 23 einzeln oder gemeinsam verstellt werden.

## Patentansprüche

1. Ballenpresse (10) mit einem quaderförmigen Preßraum (18) und einem in diesem beweglich aufgenommenen Presskolben (48), **dadurch gekennzeichnet, daß** ein Gehäuseoberteil (20) des Pressraums (18) gegenüber dessen Gehäuseunterteil (22) im Bewegungsbereich des Presskolbens (48) zur Veränderung des Querschnitts eines Ballens (44) verstellbar ist.

2. Ballenpresse nach Anspruch 1, **dadurch gekennzeichnet, daß** Nadeln (68) zum Binden des Ballens (44) mit dem beweglichen Gehäuseoberteil (20) verbunden sind.

3. Ballenpresse nach Anspruch 1 oder 2, **dadurch gekennzeichnet, daß** ein Antrieb (50) zum Bewegen des Presskolbens (48) in der Verstellrichtung des Gehäuseoberteils (20) verstellbar ist.

4. Ballenpresse nach einem oder mehreren der vorherigen Ansprüche, **dadurch gekennzeichnet, daß** der Gehäuseoberteil (20) mittels mehrerer parallel gesteuerter Stellmotoren (106), insbesondere mittels Hydraulikmotoren, verstellbar ist.

5. Ballenpresse nach einem oder mehreren der vorherigen Ansprüche, **dadurch gekennzeichnet, daß** mit dem Gehäuseoberteil (20) oder dem Gehäuseunterteil (22) Seitenwände (96) verbunden sind, die sich über die maximale Höhe des Pressraums (18) erstrecken, oder daß mit dem Gehäuseoberteil (20) und dem Gehäuseunterteil (22) Seitenwände verbunden sind, die sich in der Höhe überlappen und sich gemeinsam über die maximale Höhe des Presskanals (18) erstrecken.

6. Ballenpresse nach einem oder mehreren der vorherigen Ansprüche, **dadurch gekennzeichnet, daß** der Presskanal (18) an mehreren Stellen von einer Verstellvorrichtung (74) umgeben wird, die jeweils ein vertikal verstellbares Joch (72) zum Tragen einer Decke (21) des Pressraums (18) und einen Grundkörper (76) zum Tragen eines Bodens (23) des Pressraums (18) enthalten, wobei an dem Grundkörper (76) Führungen (108) für den Presskolben (48) vorgesehen sind.

7. Ballenpresse nach einem oder mehreren der vorherigen Ansprüche, **dadurch gekennzeichnet, daß** der Presskolben (48) in einen Oberteil (78) und einen Unterteil (80) gegliedert ist, wobei der Oberteil (78) eine Vielzahl von aufrechten, beabstandeten und in der Bewegungsrichtung des Presskolbens (48) verlaufenden Stegen (84) aufweist.

8. Ballenpresse nach einem oder mehreren der vorherigen Ansprüche, **dadurch gekennzeichnet, daß** die Decke (21) eine der Zahl der Stege (84) entsprechende und in deren Bewegungsrichtung verlaufende Schlitze (82) aufweist, die sich wenigstens über den Bewegungsbereich des Presskolbens (48) erstrecken und die Stege (84) gleitend in sich aufnehmen.

9. Ballenpresse nach einem oder mehreren der vorherigen Ansprüche, **dadurch gekennzeichnet, daß** der Oberteil (78) und der Unterteil (80) des Presskolbens (48) getrennt ausgebildet und formschlüssig miteinander verbunden werden.

10. Ballenpresse nach einem oder mehreren der vorherigen Ansprüche, **gekennzeichnet durch** Seitenwände (96) des Pressraums (18), die in Schlitzen (98) gleitend aufgenommen werden.

11. Ballenpresse nach einem oder mehreren der vorherigen Ansprüche, **dadurch gekennzeichnet, daß** der Grundkörper (76) Öffnungen (92) aufweist, durch die sich mit dem Joch (72) verbundene Zapfen (94) zum Tragen eines Nadeltragarms (70) beweglich erstrecken können.

12. Ballenpresse nach einem oder mehreren der vorherigen Ansprüche, **dadurch gekennzeichnet, daß** anstatt des Gehäuseoberteils (20) eine Seitenwand (96) des Pressraums (18) gegenüber einer anderen Seitenwand (96) verstellbar ist, wobei die Verstellung in analoger Weise wie die des Gehäuseoberteils (20) ausgeführt wird und ein Zufuhrkanal (26) für das Pressgut in seinen Abmessungen entsprechend anpassbar ist.
